# EUROPEAN PATENT APPLICATION

(11) **EP 4 636 452 A1**
(43) Date of publication of application: **22.10.2025**
(21) Application number: 25170899.6
(22) Date of filing: 16.04.2025
(51) Int. Cl.: G02B 6/44, G02B 6/38

(54) **OPTICAL FIBER CASSETTE AND PANEL**

(30) Priority: 18.04.2024 US 202418638934
(71) Applicant: AFL Telecommunications LLC, Duncan, SC 29334 (US)
(72) Inventor: CHOI, Tony, Duncan, 29334 (US); RAVEN, Asher, Duncan, 29334 (US)
(74) Representative: Serjeants LLP

(57) **Abstract**

An optical fiber panel (10) has a mount body (20) having a front face (26) with a plurality of cassette openings in adjacent arrangement. An optical fiber cassette (100) including a cassette body (110) and a fiber optic connector adapter (130) is receivable through the cassette opening (22). The cassette body (110) includes an adapter opening and a cable opening adjacent to the adapter opening. The fiber optic connector adapter (130) is releasably attachable to the cassette body (110) through the adapter opening. The cassette body (110) includes a sidewall (114) and a base wall extending from the adapter opening and the cable opening.

## Description

### FIELD

The present disclosure relates generally to fiber optic telecommunications cassettes.

### BACKGROUND

A common scenario in fiber optic telecommunications is making optical connection points that transition from a fiber optic cable to a fiber optic connection within a module inside a modular patch panel mounted into a datarack inside a datacenter. However, when splicing fiber optic pigtails to the fiber optic cable inside a module, the available space is limited and inhibits providing fiber management, cable tie/mount points, and cable routing from the cassette. The lack of space makes handling fiber and performing splices difficult and time consuming, which may limit the connection points that are made, prohibitively increase the cost, or potentially adversely affect quality of connection.

Speed of deployment of optical networks is important for earning revenue. Standards may generally require at least a 750 millimeter (mm) space between each row or aisle of racks within a data center when there are 1000 mm wide cabinets, or furthermore, including 19-inch vertical profiles. Moving between a front and rear of the cabinet can increase time of installation and maintenance of fiber optic equipment, which can undesirably increase time and cost. Cassettes and modules may generally require front and rear access. For instance, a cable may enter a panel from the front and route to the rear of the panel. Connectivity may be positioned at the front of the panel, which may require one or more iterations of front and rear access to the module and cassette, which may increase time and cost.

Existing solutions generally require access to the rear of the datarack and may be insufficient for performing a splice operation from the front of the datarack. Generally, a splice cassette will share its fiber storage area between internal and external cable fiber, which adds to the difficulty of splicing and contributes to a risk of damage to the fiber when re-accessing the module to perform upgrades or find faults.

An optical fiber cassette and a datarack panel addressing one or more aforementioned issues would be advantageous and beneficial.

### BRIEF DESCRIPTION

Aspects and advantages of the invention will be set forth in part in the following description, or may be understood from the description, or may be learned through practice of the invention.

An aspect of the present disclosure is directed to an optical fiber cassette. The cassette defines a mutually orthogonal lateral direction, transverse direction, and vertical direction. The cassette includes a cassette body having an adapter opening and a cable opening adjacent to the adapter opening. The cassette body includes a sidewall and a base wall extending from the adapter opening and the cable opening. A fiber optic connector adapter is releasably attachable to the cassette body through the adapter opening.

The cassette body may comprise an end wall extending between a pair of sidewalls, wherein the end wall is positioned distal to the adapter opening.

The cassette body may form an interior volume. The cassette body may comprise an internal wall forming a routing pathway at the interior volume. The routing pathway may be positioned between the internal wall and the sidewall or end wall.

The cassette body may comprise a retention member extending from the sidewall or the base wall. The retention member may be configured to receive a cable through an open end. The retention member may be positioned within approximately 150 millimeters along the transverse direction from the cable opening.

The cassette body may comprise a pair of sidewalls separated from one another along the vertical direction. The pair of sidewalls may be separated from one another along the vertical direction within one rack unit.

An aspect of the present disclosure is directed to an optical fiber panel. The panel defines a mutually orthogonal lateral direction, transverse direction, and vertical direction, and a reference front end and rear end separated from one another along the transverse direction. The panel includes a mount body having a front face. The front face includes a plurality of cassette openings in adjacent arrangement along the lateral direction. An optical fiber cassette includes a cassette body and a fiber optic connector adapter. The cassette body includes an adapter opening and a cable opening adjacent to the adapter opening. The fiber optic connector adapter is releasably attachable to the cassette body through the adapter opening. The cassette body includes a sidewall and a base wall extending from the adapter opening and the cable opening.

The cassette body may comprise a pair of sidewalls separated from one another along the vertical direction. The pair of sidewalls may be separated from one another along the vertical direction within one rack unit.

The plurality of cassette openings may comprise up to sixteen cassette openings within up to approximately five hundred millimeters along the lateral direction.

The adapter opening may comprise up to eight fiber ports.

The panel may be configured to receive a fiber density of up to 0.256 fibers per mm per rack unit.

The adapter opening and the cable opening may be positioned in adjacent arrangement along the vertical direction.

The cassette body may comprise a retention wall at which the adapter opening is positioned.

The cassette body may form an interior volume. The cassette body may comprise an internal wall forming a routing pathway at the interior volume. The routing pathway may be positioned between the internal wall and the sidewall or end wall.

The cassette body may comprise a retention member extending from the sidewall or the base wall. The retention member may be configured to receive a cable through an open end.

The retention member may be positioned within approximately 150 millimeters along the transverse direction from the cable opening.

The cassette body may comprise an end wall extending between a pair of sidewalls. The end wall may be positioned distal to the adapter opening.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF FIGURES

A full and enabling disclosure of the present invention, including the best mode thereof, directed to one of ordinary skill in the art, is set forth in the specification, which makes reference to the appended figures, in which:
Fig. 1 depicts a front perspective view of an optical fiber panel including a plurality of optical fiber cassettes in accordance with an aspect of the present disclosure;
Fig. 2 depicts a detailed perspective view of an embodiment of the optical fiber panel of Fig. 1, with a cassette partially removed, in accordance with an aspect of the present disclosure;
Fig. 3 depicts a front perspective view of an optical fiber panel including a plurality of optical fiber cassettes in accordance with an aspect of the present disclosure;
Fig. 4 depicts a detailed perspective view of an embodiment of the optical fiber panel of Fig. 3, with a cassette partially removed, in accordance with an aspect of the present disclosure;
Fig. 5 depicts a perspective view of an embodiment of an optical fiber cassette in accordance with aspects of the present disclosure;
Fig. 6 depicts a perspective view of an embodiment of an optical fiber cassette in accordance with aspects of the present disclosure;
Fig. 7 depicts a perspective view of an embodiment of an optical fiber cassette in accordance with aspects of the present disclosure;
Fig. 8 depicts a perspective view of an embodiment of an optical fiber cassette in accordance with aspects of the present disclosure; and
Fig. 9 depicts a perspective view of an optical fiber panel including a plurality of optical fiber cassettes in accordance with an aspect of the present disclosure.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first," "second," and "third" may be used interchangeably to distinguish one component from another and are not intended to signify location or importance of the individual components. The terms "includes" and "including" are intended to be inclusive in a manner similar to the term "comprising." Similarly, the term "or" is generally intended to be inclusive (i.e., "A or B" is intended to mean "A or B or both"). In addition, here and throughout the specification and claims, range limitations may be combined and/or interchanged. Such ranges are identified and include all the sub-ranges contained therein unless context or language indicates otherwise. For example, all ranges disclosed herein are inclusive of the endpoints, and the endpoints are independently combinable with each other. The singular forms "a," "an," and "the" include plural references unless the context clearly dictates otherwise.

Approximating language, as used herein throughout the specification and claims, may be applied to modify any quantitative representation that could permissibly vary without resulting in a change in the basic function to which it is related. Accordingly, a value modified by a term or terms, such as "generally," "about," "approximately," and "substantially," are not to be limited to the precise value specified. In at least some instances, the approximating language may correspond to the precision of an instrument for measuring the value, or the precision of the methods or machines for constructing or manufacturing the components and/or systems.

As used herein, the term "rack unit" (RU) is understood by those skilled in the art as a unit of measure of approximately 1.75 inches (in) or approximately 44.45 millimeters (mm), or up to 0.03125 in or 0.794 mm less when applied to telecommunications equipment attached to a mount structure.

Dimensions provided herein may include approximations of +/-2% of any discrete quantity, or approximations of +2% of a maximum value over a given range or -2% of the maximum value under the given range, unless otherwise provided herein.

The word "exemplary" is used herein to mean "serving as an example, instance, or illustration." In addition, references to "an embodiment" or "one embodiment" does not necessarily refer to the same embodiment, although it may. Any implementation described herein as "exemplary" or "an embodiment" is not necessarily to be construed as preferred or advantageous over other implementations. Moreover, each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims and their equivalents.

Embodiments of an optical fiber cassette and a datarack panel addressing one or more aforementioned issues is provided. Embodiments provided herein allow for an inbound cable to egress from the front of the cassette along with associated connectivity. Mounting of the cassette from the front of the panel mitigates or removes a requirement for a user to access the rear of the panel, which may significantly reduce time and cost of installation and maintenance. Embodiments provided herein allow for the cable exiting the front of the cassette to route vertically. Vertical routing may further allow for routing directly to equipment at the same cabinet at which the cassette and panel are mounted. For instance, equipment at the cabinet may further include connectivity at the front face, and embodiments of the cassette and panel provided herein may allow for vertical routing from the front of the cassette directly to the front of the equipment.

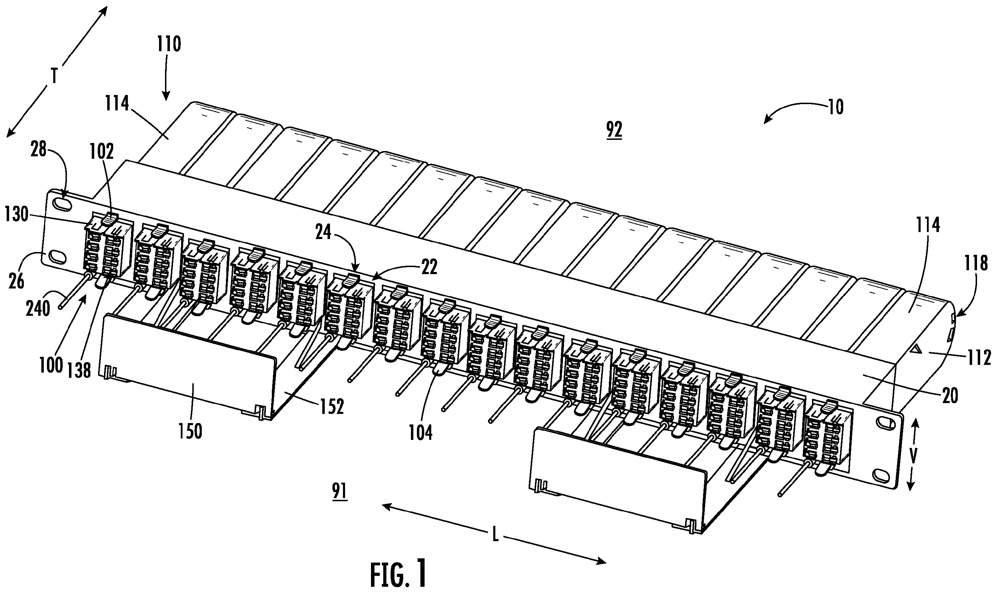

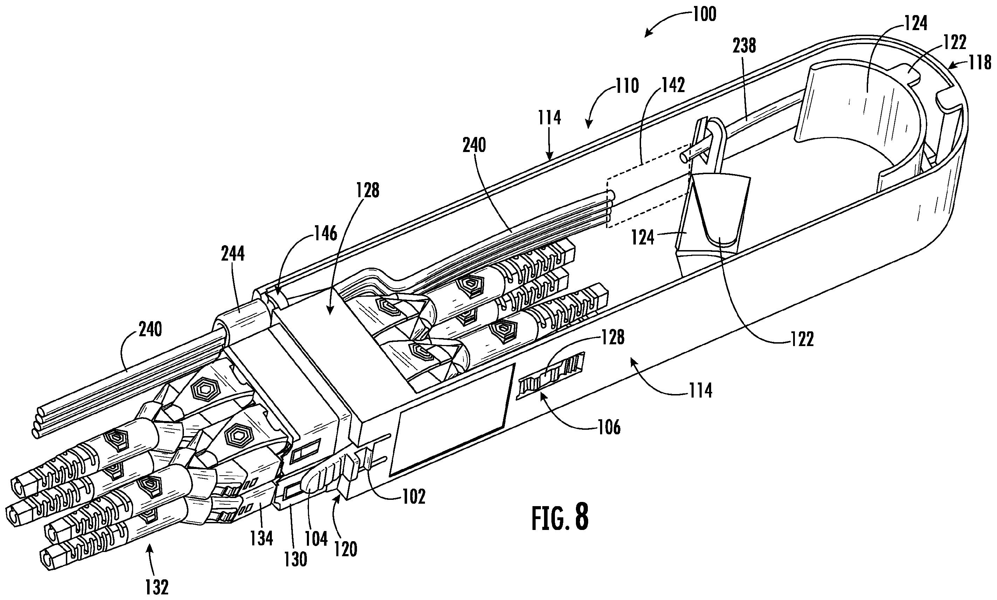

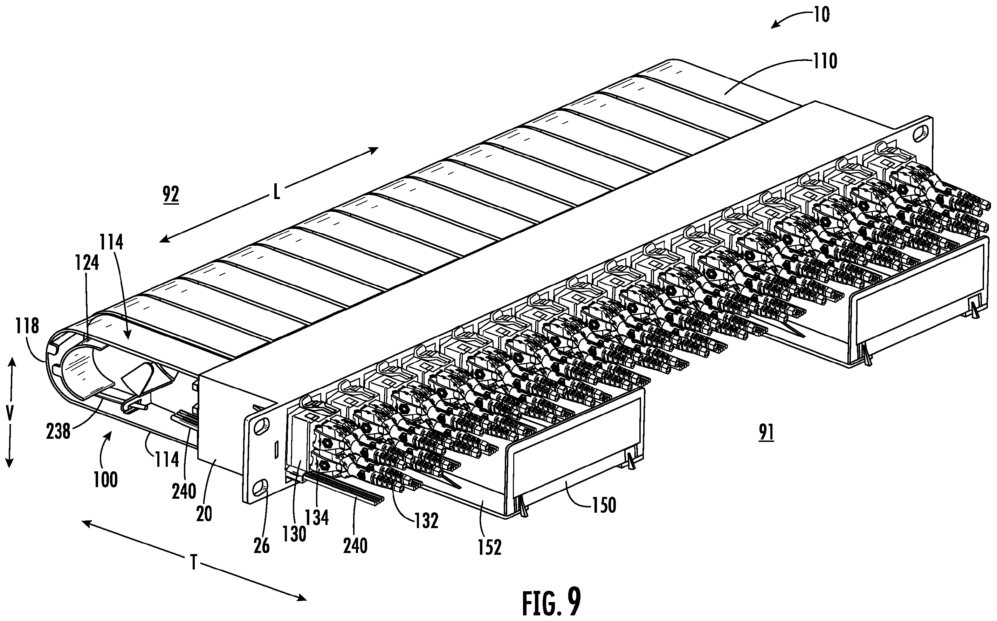

Referring now to the drawings, Figs. 1-9 depict embodiments of an optical fiber panel 10 and fiber optic cassette 100. A mutually orthogonal reference lateral direction L, transverse direction T, and vertical direction V are provided. A reference front end 91 is separated along the transverse direction T from a reference rear end 92. The panel 10 includes a front face 26 forming a cassette opening 22 through which the cassette 100 is received to the panel 10. The front face 26 may include a mount interface 28, such as a hole, slot, or latch, configured to attach the panel 10 to a frame of a datarack. A mount body 20 may include a plurality of walls extending along the lateral direction L and transverse direction T. The front face 26 may couple to the mount body 20, such as to form a body receiving and supporting a plurality of cassettes 100. A plurality of openings 22 are formed through the front face 26 in adjacent arrangement along the lateral direction L, such as to receive the plurality of cassettes 100 in adjacent arrangement along the lateral direction L.

Embodiments of the cassette 100 include a cassette body 110 including a base wall 112 and a sidewall 114 forming an interior volume 116. A rear wall 118 may extend between a pair of sidewalls 114. An adapter opening 120 is formed into which a fiber optic connector adapter 130 is receivable.

In some embodiments, the base wall 112 and the sidewall 114 extend substantially along the transverse direction T. The cassette body 110 may include a pair of sidewalls 114 separated along the vertical direction V. The end wall 118 may extend and connect between the sidewalls 114. The end wall 118 may form a terminal end of the cassette body 110 along the transverse direction T, such as at the rear end 92. The adapter opening 120 is positioned proximate to the front end 91, such as distal to the end wall 118 along the transverse direction T.

A fiber optic cable assembly 132 is operably connectable to the adapter 130 at a connector port 138, such as may generally be understood. For instance, the cable assembly 132 may include a connector 134, a relief boot 136, and cable (omitted for clarity). The cable assembly 132 may be received from the front end 91 and operably couple to the adapter 130 at the cassette 100. At the interior volume 116, a receiving cable assembly 232 is operably coupled to the adapter 130. The cassette 100 may include a tab 122 extending from one or more walls, such as an internal wall 124 (e.g., extending from the base wall 112), the sidewall 114, or the end wall 118. The internal wall 124 may be configured to form one or more routing pathways 126 along which a cable 238 routes within the internal volume 116. In some embodiments, the pathway 126 is formed between the internal wall 124 and one or more of the sidewall 114 or the end wall 118.

The cassette body 110 may include a retention member 140 forming a hook, claw, or catch to receive the cable 238. The retention member 140 may extend from the base wall 112 or the sidewall 114 and form a pathway through which the cable 238 is extendable. The retention member 140 may include an open end 144 through which a user may extend the cable 238.

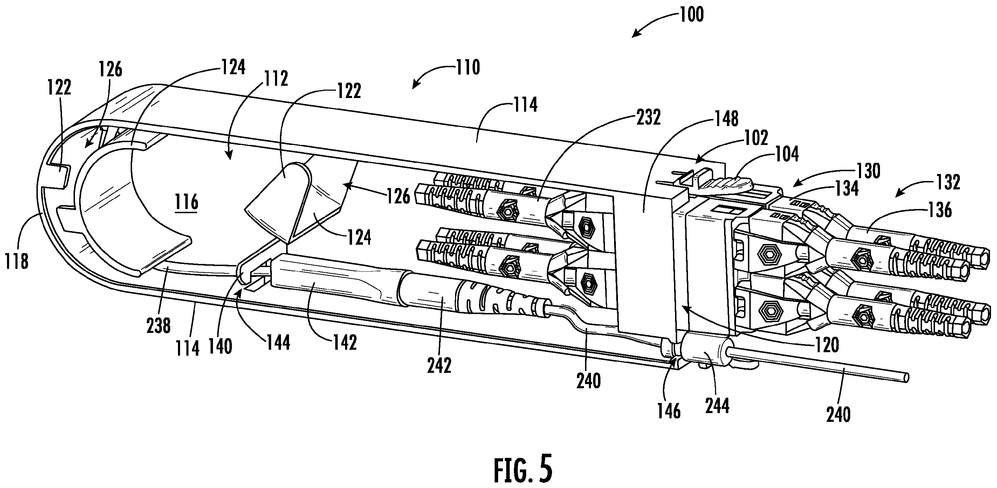

Referring to Fig. 5, in some embodiments, the retention member 140 is positioned at the cassette body 110 to receive a distal end of the cable 238, such as depicted at Fig. 5. For instance, the retention member 140 may be configured to receive an outer jacket, or bare lead, of the cable 238.

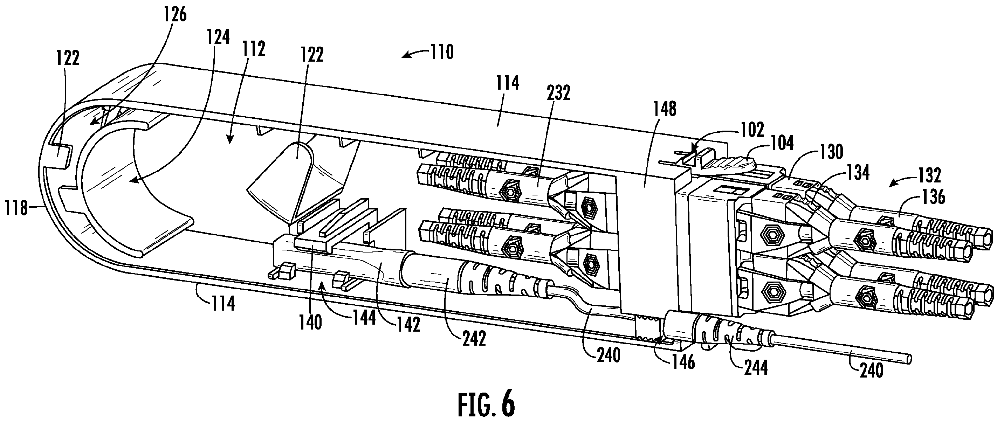

Referring to Fig. 6, in still some embodiments, the retention member 140 is positioned at the cassette body 110 to receive a connection area 142 at which the cable 238 is operably coupled to one or more exiting cables 240. For instance, the connection area 142 may include a sheath, boot, coupler, splitter, etc. surrounding terminal ends connecting cables 238, 240 to one another. The connection area 142 may surround, at least partially, a boot 242 of cable 240.

Referring to Figs. 5-6, cassette body 110 may include a cable opening 146 positioned adjacent to the adapter opening 120. Adjacent positioning of the openings, 120, 146 through a front end may facilitate entry and exit of cables 132, 240 from the front of the cassette 100. Entry and exit of the cables 132, 240 may mitigate or remove a requirement for access to the rear of the panel or datarack, improve installation and maintenance time, and decrease cost.

In various embodiments, cable opening 146 is positioned in vertically adjacent arrangement to adapter opening 120. The vertically adjacent arrangement of openings 120, 146 may promote vertical routing of the cables 132, 240. Vertical routing may further allow for routing cables directly to equipment at the same cabinet at which the cassette 100 and panel 10 are mounted.

In some embodiments, a retention wall 148 extends from sidewall 114 and/or base wall 112 to at least partially form the adapter opening 120. The retention wall 148 may separate the adapter opening 120 from the cable opening 146. For instance, the retention wall 148 may extend substantially along the vertical direction V and at least partially along the transverse direction T from the sidewall 114 toward the adjacent sidewall 114.

In some embodiments, the cassette body 110 may include an open face into the interior volume 116. However, it should be appreciated that a cover or wall may extend opposite of the base wall 112 and at least partially obscure the interior volume 116.

In still some embodiments, the opening 146 may form a notch configured to extend into a groove at a relief boot 244 of cable 240. The cable opening 146 may form a retention member between the sidewall 114 and retention wall 148, such as to retain the cable 240 or relief boot 244.

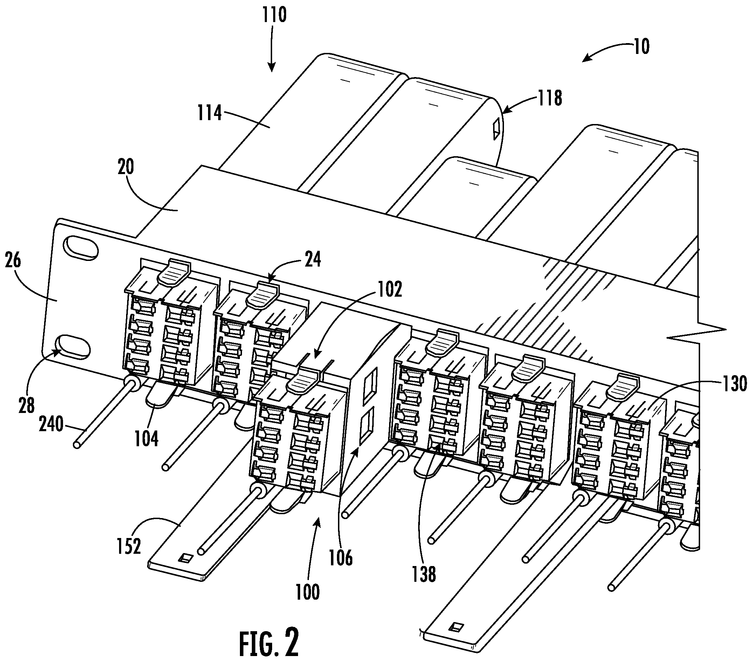

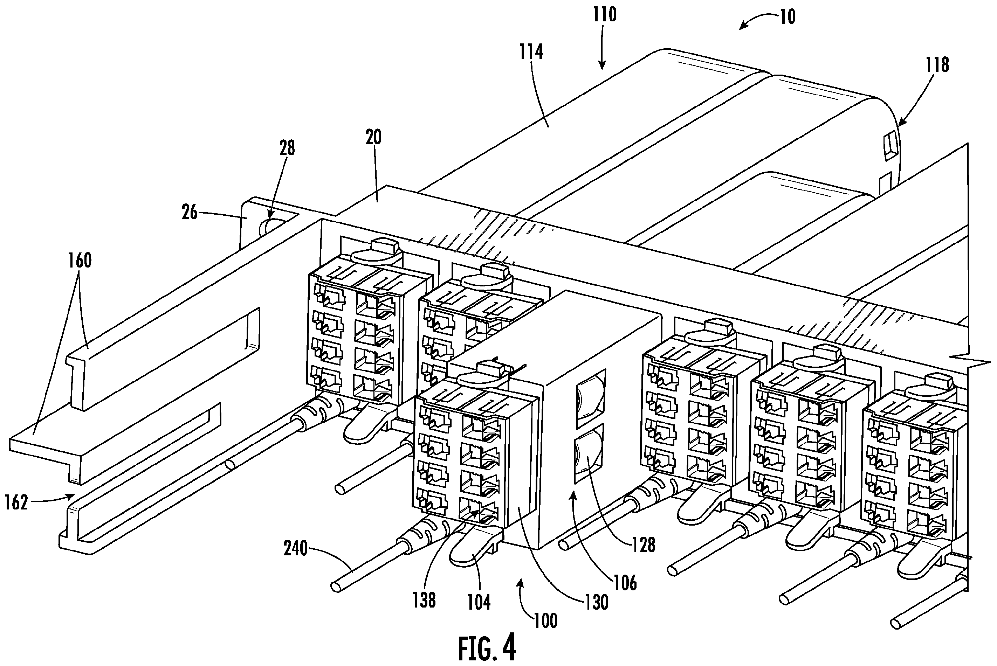

Referring to Figs. 2 and 4, the sidewall 114 or base wall 112 may include an adapter latch opening 106 into which an adapter latch 128 is receivable. A user may apply a force to the adapter latch 128 through the opening 106 to selectively release the adapter 130 from the cassette body 110.

Referring to Figs. 1-9, the front face 26 may include an attachment interface 24 at which a latch 102 at the cassette 100 is selectively coupled to the panel 10. A tab 104 may attach to the latch 102. The tab 104 may be configured to receive a pushing or pulling force from a user to selectively release or attach the latch 102 to the panel 10. The latch 102 may allow for individual attachment and release of each cassette 100 from the panel 10, such as depicted at Figs. 2 and 4.

In an exemplary embodiment, panel 10 includes sixteen (16) cassette openings 22 formed to receive a corresponding quantity of cassettes 100 at the panel 10. The plurality of cassette openings 22 are positioned in adjacent arrangement along the lateral direction L. The plurality of cassette openings 22 are positioned within an approximately 500 millimeter (mm) or approximately nineteen inch (19 inch) distance along the lateral direction L. Openings 120, 146 are positioned in adjacent arrangement along the vertical direction V.

In an exemplary embodiment, panel 10 includes sixteen (16) cassettes 100 including eight fiber (8f) connections. In various embodiments, the adapter 130 is configured as an LC adapter, such as a shuttered LC adapter. In an exemplary embodiment, the panel 10 is configured to include up to 128 fibers connectable at the adapter 130 across sixteen (16) cassettes 100. In some embodiments, the cassette 100, the cassette opening 22, and the adjacent arrangement of cassettes 100 along the lateral direction L are within one (1) rack unit along the vertical direction V. In still some embodiments, the panel 10 is configured to include up to 128 fibers connectable within an approximately 500 mm or approximately nineteen inch (19 inch) distance along the lateral direction L. In various embodiments, the panel 10 such as described may provide a fiber density of up to approximately 0.256 fibers/mm per rack unit.

In still an exemplary embodiment, the retention member 140 is positioned within approximately 150 mm along the transverse direction T from the cable opening 146.

In still another exemplary embodiment, cable 240 includes a multi-fiber push on (MPO) connector. Cable 132, 238 may include an LC connector. However, in other embodiments, other connector types and adapter types, or combinations thereof, may be utilized.

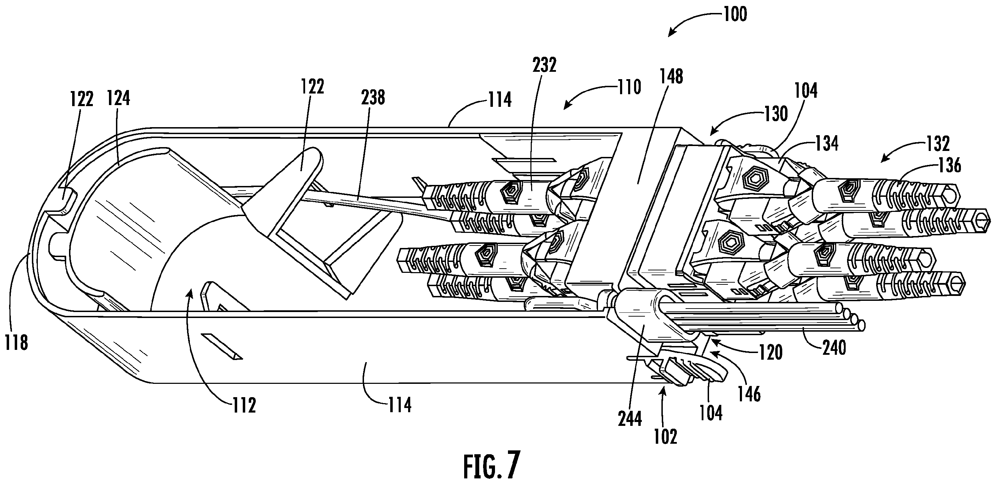

In some embodiments, such as depicted in FIGS. 7-8, cable opening 146, boot 244, or both, are configured to route therethrough a plurality of cables 240. For instance, cable 240 may be configured as approximately two millimeter (2 mm) cables. Exemplary embodiment depicted in FIGS. 7-8 provide four (4) cables 240 egressing through cable opening 146. It should be appreciated that, in other embodiments, one or more cables 240 may extend through cable opening 146.

Referring to Fig. 1, in some embodiments, a cover 150 may extend from the front face 26. A member 152, such as a rail, may extend along the transverse direction T to position the cover 150 in front of the cassette 100, such as may form a protective barrier.

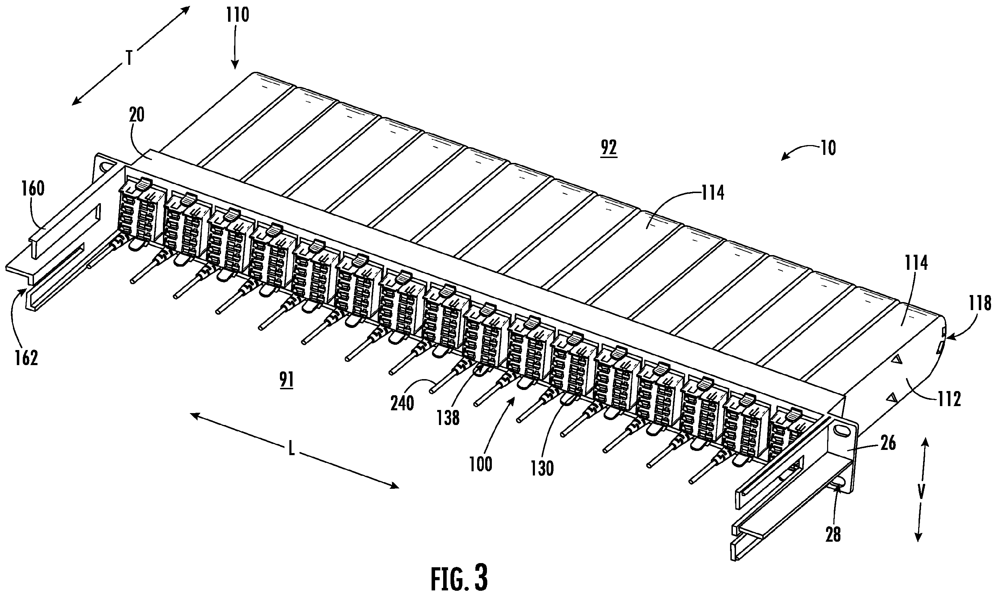

Referring to Fig. 3, in some embodiments, a cable management member 160 extends from the front face 26. The member 160, such as a rail, may extend along the transverse direction T. A slot 162 may be formed extending substantially along the transverse direction T. The cable management member 160 may be configured to receive cables 240 at the slot 162. For instance, member 160 may extend from the front face 26 or body 20 from distal ends along the lateral direction L.

Embodiments of the optical fiber cassette 100 provided herein may allow for an inbound cable to egress from the front of the cassette along with associated connectivity. Mounting of the cassette 100 from the front end 91 of the panel 10 mitigates or removes a requirement for a user to access the rear end 92 of the panel 10, which may significantly reduce time and cost of installation and maintenance. Embodiments provided herein may allow for the cable 240 exiting the front of the cassette 100 to route along the vertical direction V. Vertical routing may further allow for routing directly to equipment at the same cabinet at which the cassette 100 and panel 10 are mounted. For instance, equipment at the cabinet may further include connectivity at the front face, and embodiments of the cassette 100 and panel 10 provided herein may allow for vertical routing from the front face 26 and front of cassette 100 directly to the front of the equipment.

Further aspects of the invention are provided by one or more of the following embodiments:
1. An optical fiber cassette, the cassette defining a mutually orthogonal lateral direction, transverse direction, and vertical direction, the cassette including a cassette body including an adapter opening and a cable opening adjacent to the adapter opening, wherein the cassette body includes a sidewall and a base wall extending from the adapter opening and the cable opening; and a fiber optic connector adapter releasably attachable to the cassette body through the adapter opening.
2. The optical fiber cassette of any one or more clauses herein, wherein the cassette body includes an end wall extending between a pair of sidewalls, wherein the end wall is positioned distal to the adapter opening.
3. The optical fiber cassette of any one or more clauses herein, wherein the cassette body forms an interior volume.
4. The optical fiber cassette of any one or more clauses herein, wherein the cassette body includes an internal wall forming a routing pathway at the interior volume, wherein the routing pathway is positioned between the internal wall and the sidewall or end wall.
5. The optical fiber cassette of any one or more clauses herein, wherein the cassette body includes a retention member extending from the sidewall or the base wall, the retention member configured to receive a cable through an open end.
6. The optical fiber cassette of any one or more clauses herein, wherein the retention member is positioned within approximately 150 millimeters along the transverse direction from the cable opening.
7. The optical fiber cassette of any one or more clauses herein, wherein the cassette body includes a pair of sidewalls separated from one another along the vertical direction.
8. The optical fiber cassette of any one or more clauses herein, wherein the pair of sidewalls is separated from one another along the vertical direction within one rack unit.
9. An optical fiber panel, the panel defining a mutually orthogonal lateral direction, transverse direction, and vertical direction, the panel defining a reference front end and rear end separated from one another along the transverse direction, the panel including a mount body including a front face, wherein the front face includes a plurality of cassette openings in adjacent arrangement along the lateral direction; an optical fiber cassette including a cassette body and a fiber optic connector adapter, the cassette body including an adapter opening and a cable opening adjacent to the adapter opening, the fiber optic connector adapter releasably attachable to the cassette body through the adapter opening, wherein the cassette body includes a sidewall and a base wall extending from the adapter opening and the cable opening.
10. The optical fiber panel of any one or more clauses herein, wherein the cassette body includes a pair of sidewalls separated from one another along the vertical direction, and wherein the pair of sidewalls is separated from one another along the vertical direction within one rack unit.
11. The optical fiber panel of any one or more clauses herein, wherein the plurality of cassette openings includes up to sixteen cassette openings within up to approximately five hundred millimeters along the lateral direction.
12. The optical fiber panel of any one or more clauses herein, wherein the adapter opening includes up to eight fiber ports.
13. The optical fiber panel of any one or more clauses herein, wherein the panel is configured to receive a fiber density of up to 0.256 fibers per mm per rack unit.
14. The optical fiber panel of any one or more clauses herein, wherein the adapter opening and the cable opening are positioned in adjacent arrangement along the vertical direction.
15. The optical fiber panel of any one or more clauses herein, the cassette body including a retention wall at which the adapter opening is positioned.
16. The optical fiber panel of any one or more clauses herein, wherein the cassette body forms an interior volume.
17. The optical fiber panel of any one or more clauses herein, wherein the cassette body includes an internal wall forming a routing pathway at the interior volume, wherein the routing pathway is positioned between the internal wall and the sidewall or end wall.
18. The optical fiber panel of any one or more clauses herein, wherein the cassette body includes a retention member extending from the sidewall or the base wall, the retention member configured to receive a cable through an open end.
19. The optical fiber panel of any one or more clauses herein, wherein the retention member is positioned within approximately 150 millimeters along the transverse direction from the cable opening.
20. The optical fiber panel of any one or more clauses herein, wherein the cassette body includes an end wall extending between a pair of sidewalls, wherein the end wall is positioned distal to the adapter opening.
21. An optical fiber panel including the optical fiber cassette of any one or more clauses herein.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An optical fiber cassette (100), the cassette (100) defining a mutually orthogonal reference lateral direction (L), transverse direction (T), and vertical direction (T), the cassette (100) comprising:
a cassette body (110) comprising an adapter opening (120) and a cable opening (146) adjacent to the adapter opening (120), wherein the cassette body (110) comprises a sidewall (114) and a base wall (112) extending from the adapter opening (120) and the cable opening (146); and
a fiber optic connector adapter (130) releasably attachable to the cassette body (110) through the adapter opening (120).

2. A optical fiber cassette (100) according to claim 1, wherein the cassette body (110) comprises an end wall (118) extending between a pair of sidewalls (114), wherein the end wall (118) is positioned distal to the adapter opening (120).

3. An optical fiber cassette (100) according to claim 1 or claim 2, wherein the cassette body (110) forms an interior volume.

4. An optical fiber cassette (100) according to claim 3, wherein the cassette body (110) comprises an internal wall (124) forming a routing pathway at the interior volume, wherein the routing pathway is positioned between the internal wall (124) and the sidewall (114) or end wall (118).

5. An optical fiber cassette (100) according to any preceding claim, wherein the cassette body (110) comprises a retention member (140) extending from the sidewall (114) or the base wall (112), the retention member (140) configured to receive a cable (238) through an open end (144).

6. An optical fiber cassette (100) according to claim 5, wherein the retention member (140) is positioned within approximately 150 millimeters along the transverse direction (T) from the cable opening (146).

7. An optical fiber cassette (100) according to any preceding claim, wherein the cassette body (110) comprises a pair of sidewalls (114) separated from one another along the vertical direction (V).

8. An optical fiber cassette (100) according to claim 7, wherein the pair of sidewalls (114) is separated from one another along the vertical direction (V) within one rack unit.

9. An optical fiber panel (10), the panel (10) defining a mutually orthogonal reference lateral direction (L), transverse direction (T), and vertical direction (V), the panel (10) defining a reference front end (91) and a reference rear end (92) separated from one another along the transverse direction (T), the panel (10) comprising:
a mount body (20) comprising a front face (26), wherein the front face (26) comprises a plurality of cassette openings (22) in adjacent arrangement along the lateral direction; and
an optical fiber cassette (100) according to any preceding claim.

10. An optical fiber panel (10) according to claim 9, wherein the plurality of cassette openings (22) comprises up to sixteen cassette openings within up to approximately five hundred millimeters along the lateral direction (L).

11. An optical fiber panel (10) according to claim 9 or claim 10, wherein the adapter opening (120) comprises up to eight fiber ports.

12. An optical fiber panel (10) according to any of claims 9 to 11, wherein the panel (10) is configured to receive a fiber density of up to 0.256 fibers per mm per rack unit.

13. An optical fiber panel (10) according to any of claims 9 to 12, wherein the adapter opening (120) and the cable opening (146) are positioned in adjacent arrangement along the vertical direction (V).

14. An optical fiber panel (10) according to any of claims 9 to 13, the cassette body (110) comprising a retention wall (148) at which the adapter opening (120) is positioned.
